# EUROPEAN PATENT APPLICATION

(11) **EP 1 580 902 A1**
(43) Date of publication of application: **28.09.2005**
(21) Application number: 03769923.8
(22) Date of filing: 29.10.2003
(51) Int. Cl.: H04B 1/707

(54) **RECEIVER AND RECEIVING METHOD**

(71) Applicant: MATSUSHITA ELECTRIC INDUSTRIAL CO., LTD., Kadoma-shi, Osaka 571-8501 (JP)
(72) Inventor: MURAKAMI, Takayuki, Yokohama-shi, Kanagawa 224-0054 (JP); KITAGAWA, Keiichi, Yokohama-shi, Kanagawa 236-0042 (JP)
(74) Representative: Grünecker, Kinkeldey, Stockmair & Schwanhäusser Anwaltssozietät
(86) International application number: PCT/JP2003/013807
(87) International publication number: WO 2005/041433

(57) **Abstract**

A reception apparatus and reception method for converting symbol data to a reception bit string efficiently with a small amount of calculation. A despreading section (110) despreads a received signal. A coherent detection section (120) carries out coherent detection of a despread signal obtained by despreading the received signal using a corrected channel estimate value output from an estimate value correction section (170). A RAKE combining section (130) RAKE-combines the signal subjected to coherent detection. A phase rotation section (140) adds phase rotation corresponding to a channelization code to the RAKE-combined signal. A QPSK demapping section (150) demodulates the signal output from the phase rotation section (140) and outputs a reception bit string. A channel estimation section (160) carries out channel estimation using the received signal. The estimate value correction section (170) adds (π/4) phase rotation to each channel estimate value output from the channel estimation section (160).

## Description

### Technical Field

The present invention relates to a reception apparatus and reception method.

### Background Art

In recent years, a CDMA (Code Division Multiple Access) scheme is attracting attention as a multiple access scheme for a plurality of mobile stations in a radio communication system to carry out communications simultaneously using the same frequency band. Compared to technologies such as an FDMA (Frequency Division Multiple Access) scheme and TDMA (Time Division Multiple Access) scheme, the CDMA scheme can improve the efficiency of usage of frequencies and accommodate more users.

On the other hand, an FDD (Frequency Division Duplex) scheme and TDD (Time Division Duplex) scheme are available as transmission schemes for bidirectional transmission of signals through an uplink and downlink between a mobile station and base station in a radio communication system. The FDD scheme is a scheme using different frequency bands for an uplink and downlink, while the TDD scheme is a scheme using the same band for transmission and reception and is a scheme for time-sharing the same radio frequency and carrying out communications through the uplink and downlink alternately. Therefore, under a CDMA/TDD scheme, signals to be transmitted are processed according to the CDMA scheme and transmission through the uplink and downlink is carried out according to the TDD scheme.

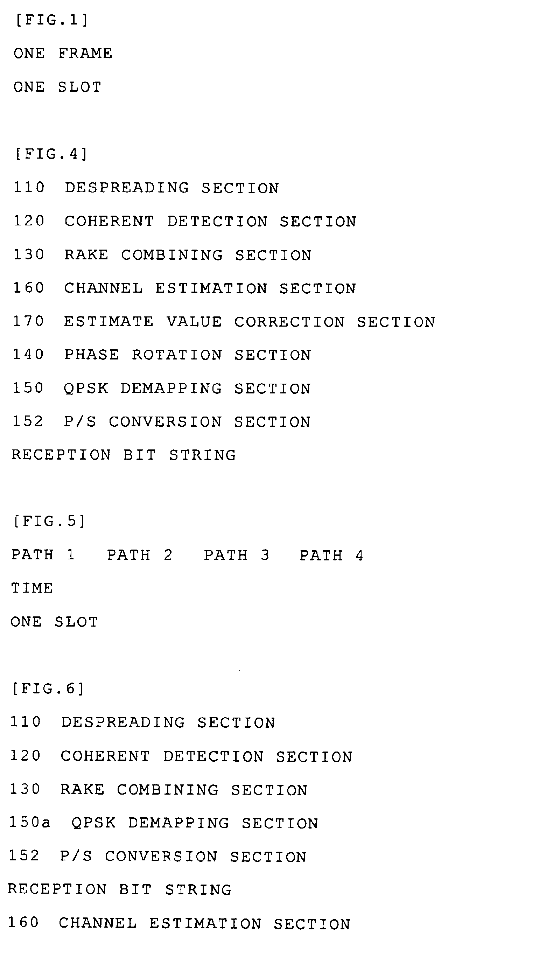

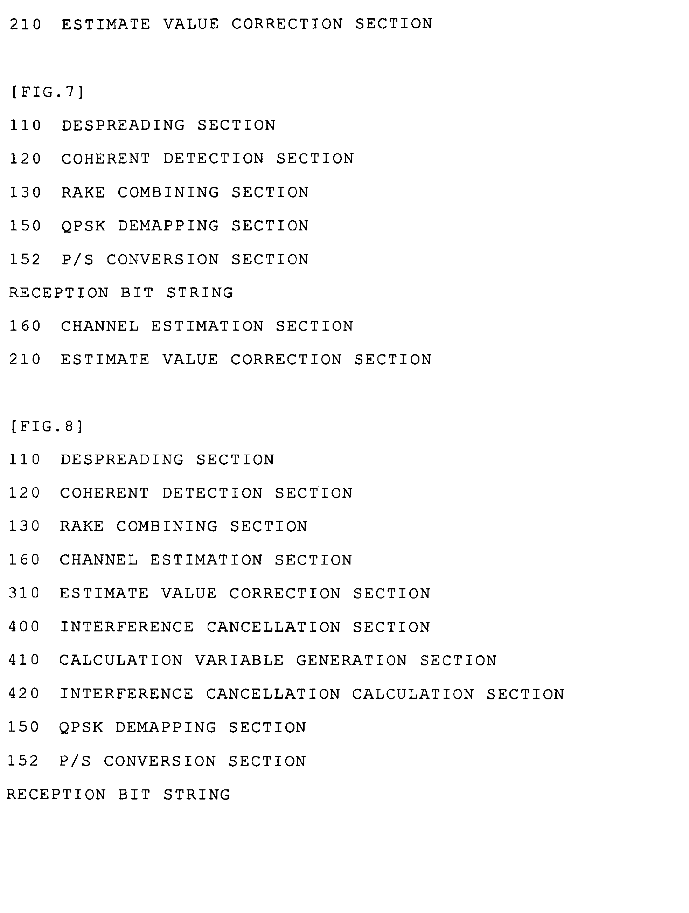

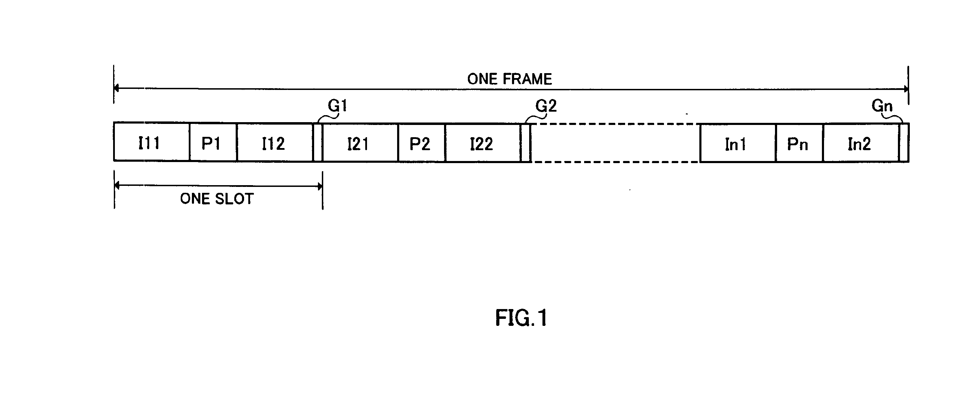

FIG.1 illustrates an example of the frame configuration of a signal in a radio communication system using a CDMA/TDD scheme. As shown in the same figure, one frame consists of a plurality of slots, each of which is made up of one pilot symbol block, two information symbol blocks and one guard symbol block. That is, in one slot, a pilot symbol block Pi (i=1 to n) is interposed between an information symbol block Ii1 (i=1 to n) and information symbol block Ii2 (i=1 to n), followed by a guard symbol block Gi (i=1 to n).

Each pilot symbol block Pi consists of a known symbol string having a predetermined length (e.g., 10 symbols). Each of the information blocks Ii1 and Ii2 includes a predetermined number of information symbols (maximum 61 symbols) . Each guard symbol block Gi consists of a symbol string with no information having a predetermined length (e.g., 2 symbols). The signal in such a frame configuration is subjected to information modulation, for example, QPSK modulation at an apparatus on the transmitting side such as a base station, spread/modulated using a predetermined spreading code and sent to an apparatus on the receiving side such as a mobile station.

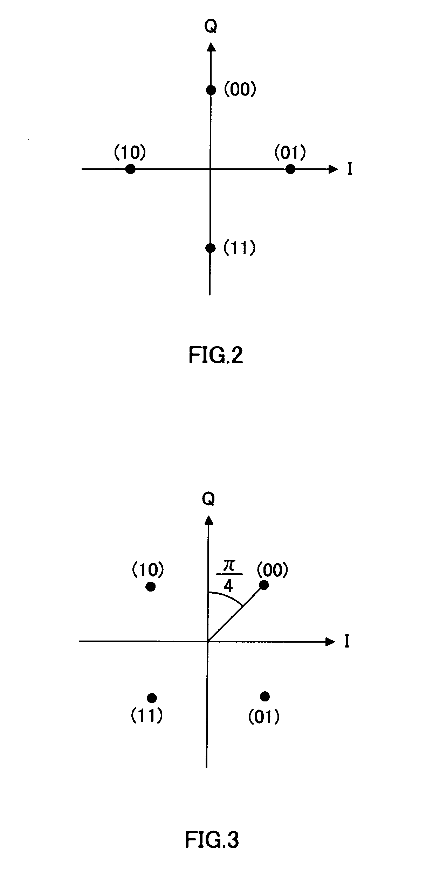

More specifically, as described in the 3GPP Specification TS25.223 "3rd Generation Partnership Project; Technical Specification Group Radio Access Network; Spreading and modulation (TDD) ", a transmission bit string is subj ected to QPSK modulation, thereby mapped to symbol positions as shown in FIG.2 and symbol data is obtained. The symbol data is given phase rotation according to a channelization code assigned to each apparatus on the receiving side which becomes the destination, subjected to spreading processing and then sent.

Then, the transmission signal is received by an apparatus on the receiving side and despread using the channelization code. Furthermore, channel estimation is performed using the pilot symbol block Pi included in the received signal and coherent detection of the received signal is performed using the despreading result and channel estimation result. The coherent detection result is further RAKE-combined and given phase rotation according to the channelization code.

The symbol data obtained through the above described processing is demapped to the symbol positions shown in FIG.2 as in the case of the symbol data at the apparatus on the transmitting side. When this symbol data is subjected to turbo decoding and Viterbi decoding here, each bit included in the symbol data needs to be output with a soft decision value, and therefore the symbol data is phase-rotated by (-π/4), demapped to symbol positions as shown in FIG. 3 and out of the two QPSK-modulated bits, an I-axis component is used as the soft decision value of the first bit and a Q-axis component is used as the soft decision value of the second bit.

However, the above described apparatus on the receiving side needs to add phase rotation to all symbol data, which results in a problem of increasing an amount of calculation.

In the case of the above described slot configuration, for example, the number of symbols of the information symbol block Ii1 and information symbol block Ii2 is a maximum of 122 (61×2) symbols and adding phase rotation to all these symbols requires an enormous amount of calculation.

### Disclosure of Invention

It is an object of the present invention to convert symbol data to a reception bit string efficiently with a small amount of calculation.

An essence of the present invention is to eliminate the necessity for phase rotation during demodulation by carrying out coherent detection of a despread signal using a channel estimation result to which phase rotation is added.

A reception apparatus according to an aspect of the present invention comprises a channel estimation section that acquires a channel estimate value using a received signal, a phase rotation section that phase-rotates the channel estimate value and a coherent detection section that carries out coherent detection of the received signal using the corrected channel estimate value obtained through phase rotation.

A reception method according to another aspect of the present invention comprises a step of acquiring a channel estimate value using a received signal, a step of phase-rotating the channel estimate value and a step of carrying out coherent detection of the received signal using the corrected channel estimate value obtained through phase rotation.

### Brief Description of Drawings

FIG.1 illustrates is an example of the frame configuration of a signal used in a CDMA/TDD scheme;
FIG.2 illustrates an example of symbol mapping according to QPSK modulation;
FIG. 3 illustrates another example of symbol mapping according to QPSK modulation;
FIG.4 is a block diagram showing the configuration of main components of a reception apparatus according to Embodiment 1 of the present invention;
FIG.5 illustrates the operation of a channel estimation section according to Embodiment 1;
FIG.6 is a block diagram showing the configuration of main components of a reception apparatus according to Embodiment 2 of the present invention;
FIG.7 is a block diagram showing the configuration of main components of a reception apparatus according to Embodiment 3 of the present invention; and
FIG.8 is a block diagram showing the configuration of main components of a reception apparatus according to Embodiment 4 of the present invention.

### Best Mode for Carrying out the Invention

With reference now to the attached drawings, embodiments of the present invention will be explained in detail below.

### (Embodiment 1)

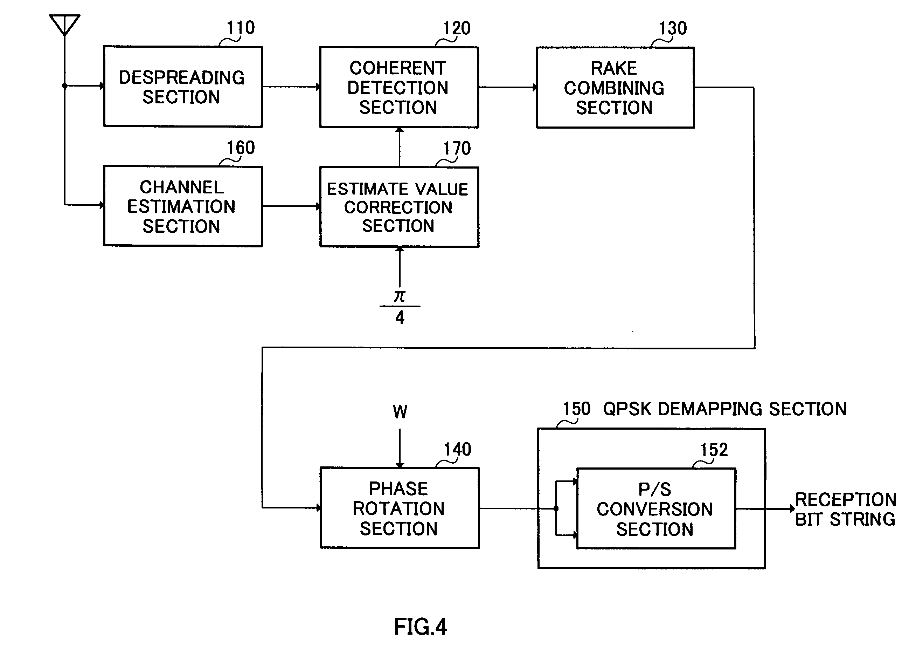

FIG.4 is a block diagram showing the configuration of main components of a reception apparatus according to Embodiment 1 of the present invention. The reception apparatus shown in the figure is provided with a despreading section 110, a coherent detection section 120, a RAKE combining section 130, a phase rotation section 140, a QPSK demapping section 150 made up of a P/S (parallel/serial) conversion section 152, a channel estimation section 160 and an estimate value correction section 170.

The despreading section 110 carries out despreading processing on a signal received through an antenna using a channelization code assigned to the own apparatus.

The coherent detection section 120 carries out coherent detection of the despread signal obtained by despreading the received signal using a corrected channel estimate value output from the estimate value correction section 170.

The RAKE combining section 130 RAKE-combines the signal subjected to coherent detection.

The phase rotation section 140 adds phase rotation to the RAKE-combines signal by an amount of phase rotation W corresponding to the channelization code assigned to the reception apparatus.

The QPSK demapping section 150 demodulates the signal output from the phase rotation section 140 and outputs a reception bit string. More specifically, the QPSK demapping section 150 demodulates the QPSK-modulated output signal of the phase rotation section 140, acquires I-axis component and Q-axis component bits and the P/S conversion section 152 performs a parallel/serial conversion and outputs a reception bit string.

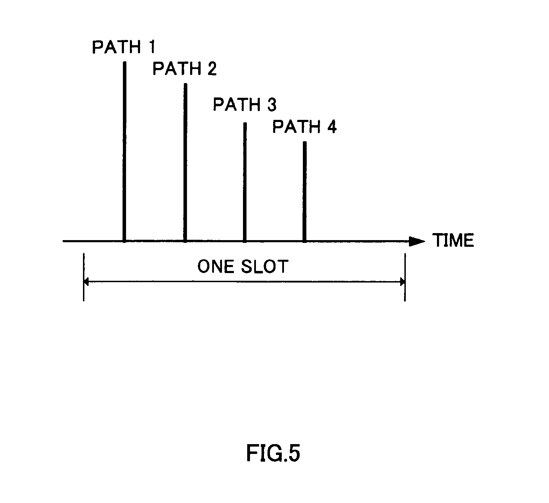

The channel estimation section 160 carries out channel estimation using the signal received through the antenna and outputs the channel estimate value obtained to the estimate value correction section 170. Here, as many channel estimate values as paths detected within a time corresponding to one slot are obtained as a result of channel estimation. That is, for example, as shown in FIG.5, when four paths of paths 1 to 4 are detected through channel estimation within the one-slot time, four channel estimate values are obtained.

The estimate value correction section 170 adds (π /4) phase rotation to each channel estimate value output from the channel estimation section 160. Therefore, as shown in FIG. 5, when four paths of paths 1 to 4 are detected within the one-slot time, (π/4) phase rotation is added to each of the four channel estimate values.

Next, the operation of the reception apparatus constructed as shown above will be explained.

First, the signal received through the antenna is input to the despreading section 110 and channel estimation section 160. The despreading section 110 uses the channelization code assigned to the own apparatus, despreads the received signal and outputs the despread signal to the coherent detection section 120.

On the other hand, the channel estimation section 160 carries out channel estimation, detects paths of direct waves and delay waves and outputs the channel estimate values of the respective paths to the estimate value correction section 170. The estimate value correction section 170 adds (π/4) phase rotation to the estimate values in the respective paths and the corrected channel estimate values obtained are output to the coherent detection section 120.

Here, the number of paths detected by the channel estimation section 160 within a one-slot time is very small compared to the number of symbols included in the received signal, and therefore only a small amount of calculation of phase rotation is required for channel estimate values corresponding to the respective paths.

Then, the coherent detection section 120 uses the corrected channel estimate values to carry out coherent detection of the despread signal. This coherent detection uses the corrected channel estimate value with (π/4) phase rotation added, and therefore the signal after coherent detection is equivalent to each symbol with (π/4) phase rotation added.

The RAKE combining section 130 RAKE-combines signals after coherent detection and thereby obtains a RAKE-combined signal with signals corresponding to the respective paths combined. Then, the phase rotation section 140 adds phase rotation to the RAKE-combined signal by an amount of phase rotation W determined in accordance with the channelization code, the QPSK demapping section 150 demodulates the signal and the P/S conversion section 152 converts the signal from parallel to serial and outputs a reception bit string made up of I-axis component and Q-axis component bits.

As explained in the above described Background Art, when each of the information symbol block Ii1 and information symbol block Ii2 included in each slot of the signal in the frame configuration shown in FIG.1 consists of, for example, 61 symbols, the conventional example needs to add (π/4) phase rotation to 122 symbols, while this embodiment only needs to add (π/4) phase rotation to four channel estimate values when, for example, four paths are detected within a one-slot time as shown in FIG.5.

In this way, this embodiment carries out (π/4) phase rotation on only channel estimate values obtained from the received signal within a one-slot time to acquire a corrected channel estimate value and carries out coherent detection of the despread signal using the corrected channel estimate value, and can thereby convert symbol data to a reception bit string with a smaller amount of calculation and more efficiently than when phase rotation is applied to each symbol of a RAKE-combined signal.

### (Embodiment 2)

A feature of Embodiment 2 of the present invention is to add phase rotation determined in accordance with a channelization code to a channel estimate value.

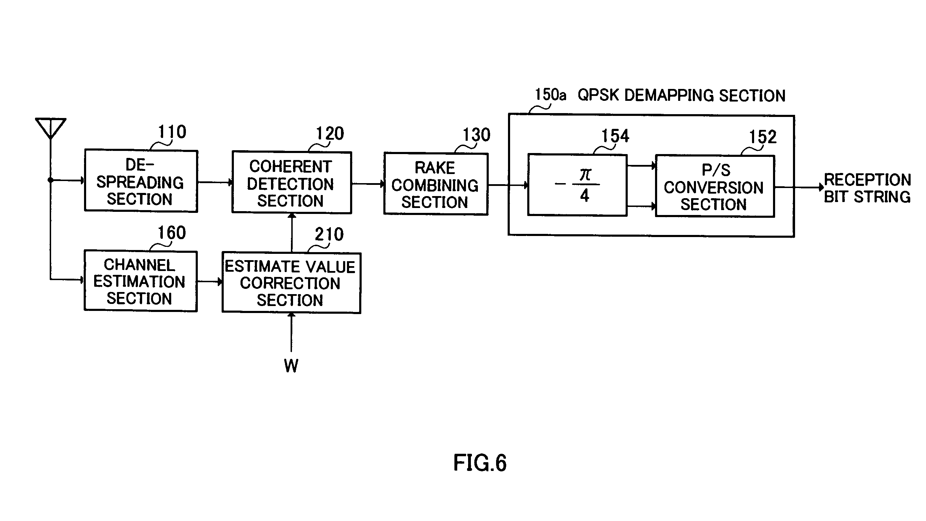

FIG.6 is a block diagram showing the configuration of main components of a reception apparatus according to Embodiment 2. In the same figure, the same components as those in FIG. 4 are assigned the same reference numerals and explanations thereof will be omitted.

The reception apparatus shown in FIG.6 is provided with a despreading section 110, a coherent detection section 120, a RAKE combining section 130, a QPSK demapping section 150a made up of a P/S conversion section 152 and a (-π/4) phase shifter 154, a channel estimation section 160 and an estimate value correction section 210.

The QPSK demapping section 150a demodulates a signal output from the RAKE combining section 130 and outputs a reception bit string. More specifically, the QPSK demapping section 150a causes the (-π/4) phase shifter 154 to phase-rotate the QPSK-modulated output signal of the RAKE combining section 130 by (-π/4) and demodulate the output signal to acquire I-axis component and Q-axis component bits, and causes the P/S conversion section 152 to convert the signal from parallel to serial and output a reception bit string.

The estimate value correction section 210 adds phase rotation to each channel estimate value output from the channel estimation section 160 by an amount of phase rotation W determined in accordance with the channelization code.

Next, the operation of the reception apparatus constructed as shown above will be explained.

First, a signal received through an antenna is input to the despreading section 110 and channel estimation section 160. The despreading section 110 despreads the received signal using the channelization code assigned to the own apparatus and outputs the despread signal to the coherent detection section 120.

On the other hand, the channel estimation section 160 carries out channel estimation, detects paths of direct waves and delay waves and outputs channel estimate values in the respective paths to the estimate value correction section 210. The estimate value correction section 210 adds phase rotation to the channel estimate values in the respective paths by an amount of phase rotation W determined in accordance with the channelization code and outputs the corrected channel estimate values obtained to the coherent detection section 120.

Here, the number of paths detected by the channel estimation section 160 within a one-slot time is very small compared to the number of symbols included in the received signal, and therefore only a small amount of calculation of phase rotation is required for the channel estimate values corresponding to the respective paths.

Then, the coherent detection section 120 uses the corrected channel estimate values to carry out coherent detection of the despread signal. This coherent detection uses the corrected channel estimate value with phase rotation added by an amount of phase rotation W, and therefore the signal after coherent detection is equivalent to one with phase rotation added to the respective symbols by an amount of phase rotation W.

The RAKE combining section 130 RAKE-combines signals after coherent detection to obtain a RAKE-combined signal with signals corresponding to the respective paths combined. Then, the (-π/4) phase shifter 154 in the QPSK demapping section 150a adds (-π/4) phase rotation to the RAKE-combined signal and demodulates the signal, and the P/S conversion section 152 converts the signal from parallel to serial and outputs a reception bit string made up of I-axis component and Q-axis component bits.

As explained in the above described Background Art, when each of the information symbol block Ii1 and information symbol block Ii2 included in each slot of the signal in the frame configuration shown in FIG.1 consists of 61 symbols, the conventional example needs to add phase rotation to 122 symbols by an amount of phase rotation W, while this embodiment only needs to add phase rotation to four channel estimate values by an amount of phase rotation W when, for example, four paths are detected within a one-slot time as shown in FIG.5.

In this way, this embodiment carries out phase rotation on only channel estimate values obtained from the received signal within a one-slot time by an amount of phase rotation determined in accordance with the channelization code, acquires the corrected channel estimate values and carries out coherent detection of the despread signal using the corrected channel estimate values, and can thereby convert symbol data to a reception bit string with a smaller amount of calculation and more efficiently than when phase rotation is applied to each symbol of the RAKE-combined signal.

### (Embodiment 3)

A feature of Embodiment 3 of the present invention is to add both phase rotation required for QPSK demapping and phase rotation determined in accordance with a channelization code to a channel estimate value.

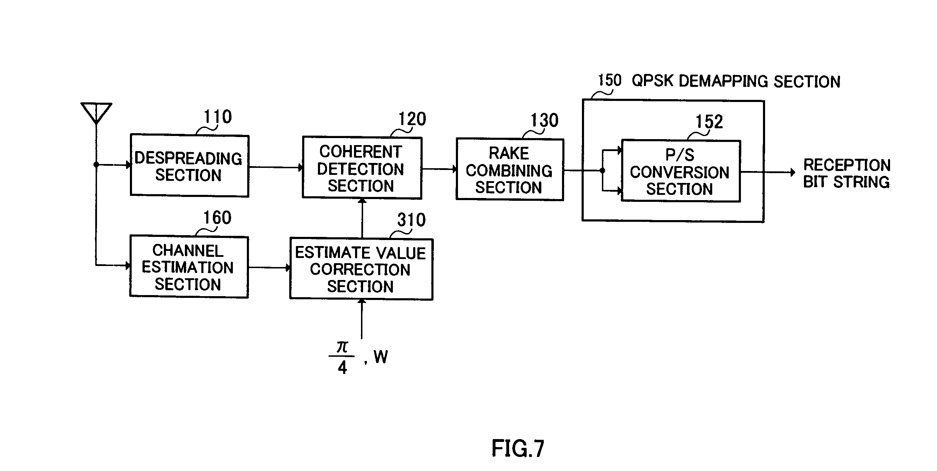

FIG.7 is a block diagram showing the configuration of main components of a reception apparatus according to Embodiment 3. In the same figure, the same components as those in FIG. 4 are assigned the same reference numerals and explanations thereof will be omitted.

The reception apparatus shown in FIG.7 is provided with a despreading section 110, a coherent detection section 120, a RAKE combining section 130, a QPSK demapping section 150 made up of a P/S conversion section 152, a channel estimation section 160 and an estimate value correction section 310.

The estimate value correction section 310 adds an amount of phase rotation W determined in accordance with a channelization code and (π/4) phase rotation to each channel estimate value output from the channel estimation section 160.

Next, the operation of the reception apparatus constructed as shown above will be explained.

First, a signal received through an antenna is input to the despreading section 110 and channel estimation section 160. The despreading section 110 despreads the received signal using the channelization code assigned to the own apparatus and outputs the despread signal to the coherent detection section 120.

On the other hand, the channel estimation section 160 carries out channel estimation, detects paths of direct waves and delay waves and outputs channel estimate values in the respective paths to the estimate value correction section 310. The estimate value correction section 310 adds an amount of phase rotation W determined in accordance with the channelization code and (π/4) phase rotation to the channel estimate values in the respective paths and outputs the corrected channel estimate values obtained to the coherent detection section 120.

Here, the number of paths detected by the channel estimation section 160 within a one-slot time is very small compared to the number of symbols included in the received signal, and therefore only a small amount of calculation of phase rotation is required for channel estimate values corresponding to the respective paths.

Then, the coherent detection section 120 uses the corrected channel estimate values to carry out coherent detection of the despread signal. In this coherent detection, the corrected channel estimate values with an amount of phase rotation W and (π/4) phase rotation added are used, and therefore the signal after coherent detection is equivalent to one with an amount of phase rotation W and (π/4) phase rotation added to the respective symbols.

The RAKE combining section 130 RAKE-combines signals after coherent detection to obtain a RAKE-combined signal with signals corresponding to the respective paths combined. Then, the QPSK demapping section 150 demodulates the RAKE-combined signal and the P/S conversion section 152 converts the signal from parallel to serial and outputs a reception bit string made up of I-axis component and Q-axis component bits.

As explained in the above described Background Art, when each of the information symbol block Ii1 and information symbol block Ii2 included in each slot of the signal in the frame configuration shown in FIG.1 consists of 61 symbols, the conventional example needs to add phase rotation to 122 symbols by an amount of phase rotation W and (π/4), while this embodiment only needs to add phase rotation to four channel estimate values by an amount of phase rotation W and (π/4) when, for example, four paths are detected within a one-slot time as shown in FIG.5.

In this way, this embodiment carries out phase rotation on only channel estimate values obtained from the received signal within a one-slot time by an amount of phase rotation determined in accordance with the channelization code and (π/4), acquires corrected channel estimate values and carries out coherent detection of the despread signal using the corrected channel estimate values, and can thereby convert symbol data to a reception bit string with a smaller amount of calculation and more efficiently than when phase rotation is applied to each symbol of the RAKE-combined signal.

### (Embodiment 4)

A feature of Embodiment 4 of the present invention is to cancel interference from a RAKE-combined signal.

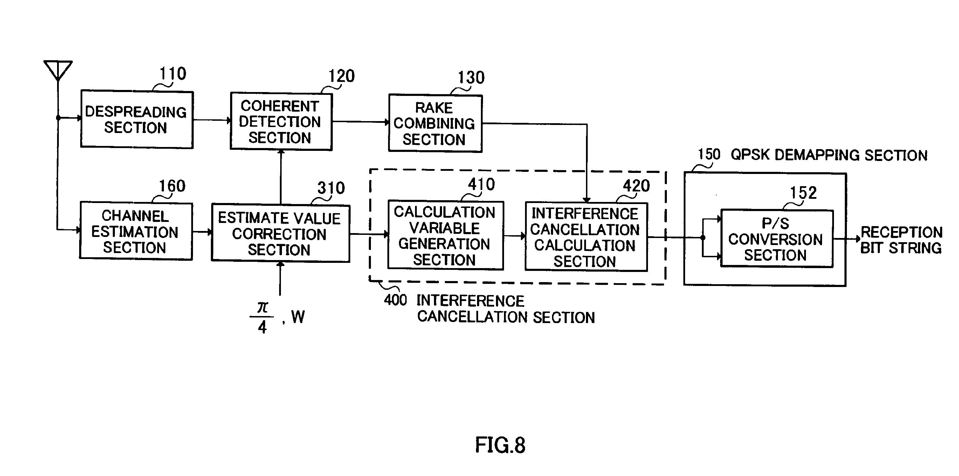

FIG.8 is a block diagram showing the configuration of main components of a reception apparatus according to Embodiment 4. In the same figure, the same components as those in FIG. 6 are assigned the same reference numerals and explanations thereof will be omitted.

The reception apparatus shown in FIG.8 is provided with a despreading section 110, a coherent detection section 120, a RAKE combining section 130, a QPSK demapping section 150 made up of a P/S conversion section 152, a channel estimation section 160, an estimate value correction section 310 and an interference cancellation section 400 made up of a calculation variable generation section 410 and an interference cancellation calculation section 420. Suppose the despreading section 110 according to this embodiment applies a high-speed Hadamard transform and carries out despreading processing on signals directed to a reception apparatus other than the own apparatus simultaneously. A reception apparatus other than the own apparatus will be referred to as "other user" and all reception apparatuses including the own apparatus within the same cell as that of the own apparatus will be referred to as "all users" below.

The interference cancellation section 400 cancels interference of a RAKE-combined signal using corrected channel estimate values and spreading information on multiplexed codes of all users. More specifically, in the interference cancellation section 400, the calculation variable generation section 410 uses the corrected channel estimate values and spreading information on the multiplexed codes of all users, generates calculation variables for interference cancellation and the interference cancellation calculation section 420 uses calculation variables for the RAKE-combined signal and thereby carries out calculations to cancel influences of inter-code interference such as JD (Joint Detection) calculation and interference from other users. For the interference cancellation section 400, it is possible to use the technology described in documents such as "Interference Cancellationvs. Channel Equalization and Joint Detection for the Downlink of C/TDMA Mobile Radio Concepts" (Bernd Steiner, Proceedings of EPMCC Conference Germany 1997, No. 145, pp.253-260) or "EFFICIENT MULTI-RATE MULTI -USER DETECTION FOR THE ASYNCHRONOUS WCDMA UPLINK" (H.R.Karimi, VTC'99, pp.593-597).

Next, the operation of the reception apparatus constructed as shown above will be explained.

First, a signal received through an antenna is input to the despreading section 110 and channel estimation section 160. The despreading section 110 despreads the received signal using the channelization code assigned to the own apparatus and outputs the despread signal to the coherent detection section 120.

On the other hand, the channel estimation section 160 carries out channel estimation, detects paths of direct waves and delay waves and outputs channel estimate values in the respective paths to the estimate value correction section 310. The estimate value correction section 310 adds an amount of phase rotation W determined in accordance with a channelization code and (π/4) phase rotation to the channel estimate values in the respective paths and outputs the corrected channel estimate values obtained to the coherent detection section 120 and the calculation variable generation section 410 in the interference cancellation section 400.

Here, the number of paths detected by the channel estimation section 160 within a one-slot time is very small compared to the number of symbols included in the received signal, and therefore only a small amount of calculation of phase rotation is required for channel estimate values corresponding to the respective paths.

Then, the coherent detection section 120 uses the corrected channel estimate values to carry out coherent detection of the despread signal. In this coherent detection, the corrected channel estimate values with an amount of phase rotation W and (π/4) phase rotation added are used, and therefore the signal after coherent detection is equivalent to one with an amount of phase rotation W and (π/4) phase rotation added to the respective symbols.

The RAKE combining section 130 RAKE-combines signals after coherent detection and obtains a RAKE-combined signal with signals corresponding to the respective paths combined and outputs the RAKE-combined signal to the interference cancellation calculation section 420.

Furthermore, the calculation variable generation section 410 uses the corrected channel estimate values and spreading information on the multiplexed code of all users in the same cell as that of the own apparatus, generates calculation variables to cancel interference and the interference cancellation calculation section 420 uses the calculation variables for the RAKE-combined signal, carries out calculation such as JD calculation and cancels influences of inter-code interference and other user interference.

Then, the QPSK demapping section 150 demodulates the signal after interference cancellation and the P/S conversion section 152 converts the signal from parallel to serial and outputs a reception bit string made up of I-axis component and Q-axis component bits.

Thus, this embodiment carries out phase rotation on only channel estimate values obtained within a one-slot time from the received signal by an amount of phase rotation determined in accordance with the channelization code and (π/4), acquires corrected channel estimate values, carries out coherent detection of the despread signal using the corrected channel estimate values and cancels interference of the RAKE-combined signal, and can thereby convert symbol data to a reception bit string with a smaller amount of calculation and more efficiently than when phase rotation is applied to each symbol of the RAKE-combined signal.

The above described embodiments have explained the case where QPSK is applied as the modulation scheme and an amount of phase rotation added to channel estimate values is (π/4), but the present invention is not limited to this and the present invention can also be implemented with appropriate modifications even when other modulation schemes are applied.

As described above, the present invention can convert symbol data to a reception bit string efficiently with a small amount of calculation.

This application is based on the Japanese Patent Application No.2002-301946 filed on October 16, 2002, entire content of which is expressly incorporated by reference herein.

### Industrial Applicability

The present invention is applicable to a reception apparatus and reception method.

## Claims

1. A reception apparatus comprising:
a channel estimation section that acquires a channel estimate value using a received signal;
a phase rotation section that carries out phase rotation on said channel estimate value; and
a coherent detection section that carries out coherent detection of said received signal using the corrected channel estimate value obtained through the phase rotation.

2. The reception apparatus according to claim 1, wherein said phase rotation section carries out phase rotation on said channel estimate value by an amount of phase rotation determined according to the modulation scheme of the received signal.

3. The reception apparatus according to claim 1, wherein said phase rotation section carries out phase rotation on said channel estimate value by (π/4).

4. The reception apparatus according to claim 1, wherein said phase rotation section carries out phase rotation on said channel estimate value by an amount of phase rotation determined in accordance with a channelization code assigned to the own apparatus.

5. The reception apparatus according to claim 1, further comprising:
a despreading section that despreads said received signal by multiplying the received signal by an Hadamard matrix; and
an interference cancellation section that cancels interference from the signal despread by said despreading section using said corrected channel estimate value.

6. A radio communication terminal apparatus comprising the reception apparatus according to claim 1.

7. A radio communication base station apparatus comprising the reception apparatus according to claim 1.

8. A reception method comprising:
a step of acquiring a channel estimate value using a received signal;
a step of carrying out phase rotation on said channel estimate value; and
a step of carrying out coherent detection of said received signal using the corrected channel estimate value obtained through the phase rotation.
